Europäisches Patentamt

European Patent Office

Office européen des brevets

(11) Veröffentlichungsnummer: **0 498 310 A1**

(12) **EUROPÄISCHE PATENTANMELDUNG**

(21) Anmeldenummer: **92101600.2**

(22) Anmeldetag: **31.01.92**

(51) Int. Cl.5: **B29B 15/10**, B29C 67/12, D21H 21/54, D04H 1/00

(30) Priorität: **05.02.91 DE 4103351**

(43) Veröffentlichungstag der Anmeldung: **12.08.92 Patentblatt 92/33**

(84) Benannte Vertragsstaaten: **AT BE CH DE DK ES FR GB GR IT LI LU MC NL PT SE**

(71) Anmelder: **Kölzer, Klaus Kurt**
**Benrather Schlossufer 65b**
**W-4000 Düsseldorf(DE)**

(72) Erfinder: **Kölzer, Klaus Kurt**
**Benrather Schlossufer 65b**
**W-4000 Düsseldorf(DE)**

(74) Vertreter: **Eggert, Hans-Gunther, Dr.**
**Räderscheidtstrasse 1**
**W-5000 Köln 41(DE)**

(54) Leichtfüllmaterial für Duroplaste und Verfahren zu seiner Herstellung.

(57) Leichtfüllmaterial enthaltend ein Vlies aus im wesentlichen zweidimensional orientierten Spinnfasern, die durch Mikrohohlkugeln aus Kunststoff aufgelockert und zusammengehalten werden.

Zur Herstellung des Leichtfüllmaterials schlämmt man in das zweidimensional orientierte Spinnfaservlies Partikel der ungeblähten Vorstufe von Mikrohohlkugeln in Form einer wäßrigen Suspension ein, trocknet das so erhaltene Material und erhitzt es auf die zum Aufblähen der Partikel notwendige Temperatur für die erforderliche Dauer.

EP 0 498 310 A1

Die Erfindung betrifft ein Leichtfüllmaterial für Duroplaste, wie die klassischen Amino- und Phenoplaste, Epoxidharze, Polyurethanharze und andere Reaktionsharze.

Um die Gebrauchs- und Festigkeitseigenschaften von Formteilen aus solchen Duroplasten zu erhöhen, ist es üblich, sie mit Fasermaterialien zu verstärken. Zur Reduzierung des Gewichts von Kunststoff-Formteilen ohne Verlust an mechanischer Festigkeit sowie zur Verminderung des Harzanteils und des spezifischen Gewichtes kann bei gleichem Anteil an Verstärkungsfasern ein Teil des Harzes durch sogenannte Leichtfüllstoffe ersetzt werden.

Aus der DE-C-24 33 427 ist es bekannt, eine gebundene Faserbahn, die 10 bis 60 Vol.% an expandierten Mikrokugeln - auch "Microspheres" genannt - enthält, für die Herstellung geformter faserverstärkter Kunststoffgegenstände zu verwenden. Derartige Faserbahnen und ihre Herstellung sind in der US-A-3,376,288 beschrieben. Zur Herstellung dieses voluminösen, nicht gewebten Materials wird auf regellos und ungerichtet angeordnete Stapelfasern eine Dispersion eines härtbaren Bindemittels aufgespritzt, die Partikel der unblähten Vorstufe der Mikrohohlkörper enthält. Die derart getränkte Faserbahn wird getrocknet und anschließend auf eine Temperatur erhitzt, die einerseits hoch genug ist, um das Bindemittel auszuhärten und die Mikrohohlkugeln aufzublähen, andererseits nicht so hoch ist, daß die Mikrohohlkugeln durch den Innendruck aufreißen.

In dem erhaltenen nicht gewebten Gebilde mit hoher Saugfähigkeit für Wasser beträgt der Anteil des Bindemittels, bezogen auf die Mikrohohlkugeln, 33,3 bis 66,6 Gew.%.

Ein solches gebundenes Faservlies aus Polyesterfasern und expandierten Mikrohohlkugeln dient nach der DE-C-24 33 427 zur Herstellung geformter faserverstärkter Kunststoffgegenstände und ist dafür in ähnlicher Form im Handel. Das Faservlies aus Polyesterfasern enthält z.B. auf 100 Gew.-Teile der Fasern 30 Gew.-Teile Polyacrylnitril als Binder und 70 Gew.-Teile Mikrohohlkugeln. Die Voluminisierung des Ausgangsmaterials beim Aufblähen der Mikrohohlkugeln wird durch die dreidimensional, d.h. auch senkrecht zur Ebene der Faserbahn angeordneten Fasern begrenzt. Die produktionstechnisch bedingte Ausgangsstärke beträgt deshalb etwa 50 % des Endprodukts.

Die Stapelfasern des dreidimensionalen Wirrvlieses werden von dem gehärteten oder vernetzten Bindemittel zusammengehalten. Das Bindemittel fixiert auch die Mikrohohlkügelchen an den Fasern. Deshalb hat dieses bekannte Leichtfüllmaterial auch nach Zusatz des flüssigen Harz-Härter-Gemisches immer eine gewisse Steifigkeit und mit zunehmender Materialstärke eine immer schlechter werdende dreidimensionale Verformbarkeit. Die Struktur des gebundenen Faservlieses mit den darin fixierten Mikrohohlkugeln bleibt beim Tränken mit einem flüssigen Harz-Härter-Gemisch und der Formgebung in die Gestalt des gewünschten Gegenstandes im wesentlichen erhalten.

Die EP-A-102 335 beschreibt ein mit Mikrohohlkügelchen durchsetztes Kraft- oder Packpapier in dessen Herstellung die Partikel der noch nicht expandierten Vorstufe von Mikrohohlkugeln einem für Pappe oder Kraftpapier üblichen Papierbrei beigemischt werden. Die erhaltene Faserbahn wird auf einer Papiermaschine verarbeitet und dann nach dem Trocknen auf 120°C erhitzt, um die Mikrokügelchen aufzublähen. In diesem Zwischenprodukt sind die sehr kurzen Fasern schon durch den Harzleim und andere übliche Papierbindemittel zusammengehalten, die diesem Produkt trotz einer Dichte von nur 250 kg/m$^3$ eine hohe Biege- und Reißfestigkeit verleihen. Deshalb dient dieses Verstärkungsmaterial zur Herstellung eines Verbundmaterials mit Duroplasten.

Der Erfindung liegt die Aufgabe zugrunde, ein Leichtfüllmaterial aus Fasern und Mikrohohlkörpern zu schaffen, das neue Möglichkeiten bei der Herstellung von faserverstärkten Leichtlaminaten eröffnet und die Herstellung einer neuartigen Spachtelmasse ermöglicht.

Gegenstand der Erfindung ist ein Leichtfüllmaterial, das ein Vlies aus im wesentlichen zweidimensional orientierten Spinnfasern enthält, die durch Mikrohohlkugeln aus Kunststoff aufgelockert sind und von diesen zusammengehalten werden. Die Mikrohohlkugeln sind überwiegend zwischen Schichten aus den zweidimensional orientierten Spinnfasern angeordnet.

Ein für die Zwecke der Erfindung geeignetes Spinnfaservlies (gemäß DIN 61210) ist vorzugsweise direkt aus Einzelfasern einer Länge zwischen 2 und 50 mm, insbesondere zwischen 5 und 25 mm gebildet.

Verwendbar sind auch die in der Textilindustrie üblichen Stapelfasern aus auf entsprechende Längen geschnittenen Filamentbündeln. In dem Leichtfüllmaterial liegen die Filamente aber bereits größtenteils voneinander getrennt und mit den Mikrokügelchen durchsetzt vor.

Die Spinnfasern dürfen unter den bekannten Bedingungen des Blähprozesses der Mikrohohlkörper nicht geschädigt werden. Das gilt für die meisten bekannten Textilfasern, wie Naturfasern, Chemiefasern und andere industriell hergestellte Fasern, die z.B. in RÖMPPS CHEMIELEXIKON 8. Aufl. 1988 unter dem Stichwort "Textilfasern" (textile Faserstoffe) beschrieben sind. Weil das erfindungsgemäße Leichtfüllmaterial insbesondere als Kernmaterial von glasfaserverstärkten Gegenständen (GFK-Teilen) verwendet werden soll, werden die hierfür üblichen Textilfasern bevorzugt. Besonders geeignet sind Polyester-, Polyamid- oder Zellwollfasern sowie Kohlenstoff-, Aramid-, Mineral- oder Glasfasern. Weil es bei den meisten Anwendungszwecken insbesondere für Faserverbundstoffe oder glasfaserverstärkte Kunststoffe weniger auf die Gewichtsersparnis durch die Dichte der Faserart als vielmehr durch die Verminderung des Harzverbrauchs ankommt, enthält das Leichtfüllmaterial gemäß der Erfindung bevorzugt Mineral- oder Glasfasern.

Für die Zwecke der Erfindung wesentlich ist die Anordnung der Spinnfasern in dem Ausgangsmaterial, die in dem erfindungsgemäßen Endprodukt, dem Leichtfüllmaterial für Duroplaste, im wesentlichen erhalten bleibt. Das Ausgangsmaterial ist ein Vlies (non-woven), in dem die Spinnfasern im wesentlichen, und vorzugsweise ausschließlich zweidimensional orientiert, d.h. in einer Ebene abgelegt sind. Bei diesen orientierten Vliesen (s. DIN 61210) kann es sich um Längsvliese, Kreuzlage-Vliese (Quervliese) oder Wirrvliese ohne senkrecht angeordnete Spinnfasern handeln.

Das zweidimensional orientierte Wirrvlies darf keinen größeren Anteil an Fasern aufweisen, die aus der Faserebene herausragen oder gar senkrecht dazu stehen, weil das die Volumisierung beim Blähprozeß beeinträchtigen könnte. Das ist in der Regel schon deshalb gewährleistet, weil die Dicke des Ausgangs-Vlieses nur einen Bruchteil der Faserlänge beträgt. Durch die zweidimensionale Anordnung ist das Vlies extrem dünn und hat bei einer gängigen Grammatur von beispielsweise 50 g/m² eine Materialstärke von nur 0,1 bis 0,5 mm, vorzugsweise 0,2 bis 0,3 mm.

Weitere Aspekte des erfindungsgemäßen Leichtfüllmaterials seien zunächst anhand seiner Herstellung erläutert. Wenn von einem ungebundenen Faservlies ausgegangen werden soll, werden die Spinnfasern in zweidimensionaler Anordnung auf einem kontinuierlich laufendem Sieb mit der gewünschten Schichtstärke bzw. Grammatur abgelegt. Das Ablegen dieser Spinnfasern kann z.B. in trockener Form geschehen, indem Endlosfasern durch ein Schneidwerk auf die gewünschte Länge gebracht werden. Die Zugabe der ungeblähten Vorstufe der Mikrohohlkörper auf die trockenen Fasern kann durch Aufsprühen oder Einrollen mit Walzen geschehen. Beim Naßverfahren werden die Spinnfasern gleichmäßig in einer wäßrigen Dispersion aus Wasser und Teilchen der ungeblähten Vorstufe der Mikrohohlkügelchen verteilt und anschließend wie bei der Papierherstellung in nasser Form auf einem Sieb abgelegt.

Um sowohl während der Einarbeitung der noch ungeblähten Mikrohohlkörper als auch während des anschließenden Trocknungs- und Blähprozesses das bindemittelfreie und deshalb labile Faservlies als geschlossene Bahn zu erhalten, kann von oben zusätzlich ein weiteres Endlossieb zulaufen bis durch die Temperatureinwirkung von 90 - 150°C die aufgeblähten, thermoplastischen Mikrohohlkörper durch ihre eigene Oberflächenklebrigkeit einen Verbund untereinander und mit den Fasern herstellen.

Hierbei entsteht nach Abkühlung ein bindemittelfreies, flächenartiges Vliesgebilde, mit einer für die Aufwicklung und Weiterverarbeitung ausreichenden Reißfestigkeit. Der Grad der Bindung kann über die Temperatur, d.h. über die Einstellung der Klebrigkeit der Mikrohohlkörper eingestellt werden.

Eine andere Möglichkeit, den erfindungsgemäßen Leichtfüllstoff herzustellen, verwendet als Ausgangsmaterial das oben beschriebene zweidimensional orientierte Spinnfaservlies, das durch ein in bestimmter Weise ausgewähltes Bindemittel zusammengehalten wird. Außer dieser chemischen Bindung auf Basis geeigneter Bindemittel kann das Ausgangsflächengebilde auch durch eine mechanische Bindung, z.B. mit wasserunlöslichen, im Blähbereich der Mikrokügelchen schmelzenden Fasern, die folglich die Trennung der einzelnen Schichten aus den zweidimensional orientierten Spinnfasern nicht behindern, zusammengehalten werden. Der Vorteil der Verwendung eines vorgebundenen zweidimensional orientierten Vlieses als Ausgangsmaterial liegt in der einfacheren Produktionstechnik, weil die chemisch oder mechanisch gebundenen Vliese keine zusätzliche Führung durch umlaufende Bandsiebe benötigen.

Das in Wasser schwer oder vorzugsweise unlösliche Bindemittel hat nur die Aufgabe, die in der Naßphase notwendige Reißfestigkeit des Ausgangsvlieses zu gewährleisten bis die beim Blähprozeß erhaltenen Mikrohohlkugeln durch thermische Versinterung untereinander und mit den Fasern die Verfestigung übernehmen.

Während beim Stand der Technik, insbesondere der US-A-3,376,288 und der DE-C-24 33 427, noch davon ausgegangen wird, daß die Mikrohohlkugeln die Fasern nicht binden können und deshalb erhebliche Mengen eines ausgehärteten Bindemittels verwendet werden, um diese bekannten dreidimensionalen Wirrfaservliese zusammenzuhalten, liegt der Erfindung auch die Erkenntnis zugrunde, daß die Mikrohohlkugeln in den in Frage kommenden Mengen von 30 - 70 %, bezogen auf das Volumen des Leichtfüllmaterials sehr wohl die Spinnfasern des zweidimensionalen Vlieses bis zur Verarbeitung, d.h. bis zum Tränken mit dem noch ungehärteten Duroplastharz, in völlig ausreichender Weise zusammenhalten können.

Mikrohohlkugeln (Microspheres) aus polymerem organischen Material sind mit einer thermoplastischen Schale aus Polyvinylchlorid oder einem Vinylidenchlorid-Acrylnitril-Copolymeren z.B. unter dem Handelsnamen Expancel ^R erhältlich. Die Korngröße liegt zwischen 30 und 300 $\mu$m und die Dichte beträgt etwa 20 bis 40 kg/m³.

Handelsüblich ist auch die ungeblähte Vorstufe dieser Hohlkörperfüllstoffe, die mit einem Blähmittel, wie z.B. Isobutan gefüllt ist. Die ungeblähten Partikel z.B. "unexpanded" Expancel ^R oder Folco-Microballons haben Teilchengrößen von 5 bis 10 $\mu$m. Zum Aufblähen werden sie Temperaturen von etwa 80 bis 150°C ausgesetzt, die dem Erweichungspunkt des Hüllmaterials der Mikrokügelchen entsprechen. Sobald der Erweichungspunkt erreicht ist, bläht das eingeschlossene Treibgas durch Verdampfung die einzelnen Füllstoffpartikel zu einer Hohlkugel auf.

Das Bindemittel für das Ausgangsprodukt, das zweidimensional orientierte Spinnfaservlies muß in Wasser schwer oder unlöslich sein, damit der erforderliche Zusammenhalt beim Einbringen der noch nicht expandierten Vorstufe der Mikrohohlkugeln als wäßrige bindemittelfreie Suspension gewährleistet ist.

Wenn das Vlies nur aus Einzelfasern (Elementarfäden) besteht, genügt ein Einschlämmen der Partikel, indem die Bahn des zweidimensionalen Vlieses beispielsweise durch ein Bad der wäßrigen bindemittelfreien Suspension der Hohlkörpervorstufe geführt wird.

Wenn die Spinnfasern aus Bündeln von Elementarfäden bestehen, dann bedarf es einer der in der EP-A-222 399 beschriebenen Maßnahmen, wie z.B. eines intensiven Walkprozesses, der Anwendung von Ultraschallschwingungen oder des Bestrahlens der gebundenen Vliesbahn mit der Suspension, um die Elementarfäden der Stapelfasern voneinander zu entfernen und die kleinen ungeblähten Partikel der ungeblähten Vorstufe dazwischen einzubringen. Das ist bei dem erfindungsgemäß eingesetzten Ausgangsmaterial, selbst wenn die Spinnfäden aus Bündeln von Elementarfäden bestehen, immer noch wesentlich einfacher als bei der Behandlung von endlosen Fasersträngen nach der EP-A-222 399.

Nach Einbringen der Partikel wird die Bahn des zweidimensionalen Geleges mit geeigneten Mitteln z.B. Gummilippen oder Quetschwalzen so abgestreift, daß gerade die gewünschte Menge der ungeblähten Vorstufe in dem zweidimensionalen Vlies verbleibt, die pro Flächeneinheit in Verbindung mit der Dauer und Intensität des Blähprozesses die Materialstärke des erfindungsgemäßen Leichtfüllmaterials bestimmt.

Wenn das mit der wäßrigen Suspension der ungeblähten Vorstufe der Mikrohohlkugeln eingebrachte Wasser aus dem zweidimensional orientiert angeordneten Spinnfaservlies mit den eingelagerten Partikeln entfernt ist, liegt immer noch ein extrem dünnes Material vor. Deshalb vollzieht sich der anschließende Trocknungsprozeß in einem Bruchteil der Zeit, in welcher ein entsprechender Feuchtigkeitsanteil aus einem der bekannten voluminösen Filzmaterialien entfernt werden kann, weil dieses wie eine Isolierung wirkt und den Trocken- und damit den Produktionsprozeß verlängert.

Im Gegensatz zu den vorbekannten Produkten, deren Dicke nach dem Volumisieren durch die vorhandene Materialstärke des Rohfilzes im wesentlichen vorgegeben ist und wegen der dreidimensionalen Anordnung der Fasern nur etwa verdoppelt bis verdreifacht werden kann, ist es mit der Erfindung durch die zweidimensionale Anordnung der Fasern möglich, die Dicke des Ausgangsprodukts um das 20- bis 50-fache zu erhöhen.

Dabei spielt auch das Bindemittel insofern eine wesentliche Rolle, als es beim Blähprozeß entweder entweichen oder erweichen muß, um dieses "Aufgehen" wie bei einem Blätterteig nicht zu behindern. Der Vorgang der Volumisierung gemäß der Erfindung kann auch mit dem Aufgehen eines mineralischen Schichtmaterials unter Einfluß von Wasser verglichen werden.

Für die Zwecke der Erfindung geeignet sind u.a. Bindemittel, die unter den Bedingungen des Blähprozesses verdampfen, sublimieren oder sich zersetzen.

Für den erforderlichen Zusammenhalt beim Einbringen der ungeblähten Vorstufe der Mikrohohlkügelchen in das zweidimensionale Gelege würde es genügen, wenn das Bindemittel auf die Kreuzungspunkte der Spinnfäden beschränkt wäre. Daher genügen sehr geringe Mengen des wasserunlöslichen Bindemittels. Daß es sich vorzugsweise an den Kreuzungspunkten konzentriert, läßt sich z.B. mit einer auf das Fasermaterial abgestimmten Oberflächenspannung der Bindemittellösung erreichen. Bindemittelmengen von 3 bis 10 Gew.%, bezogen auf die Faser sind in der Regel ausreichend.

Sofern das Bindemittel im Endprodukt verbleibt, ist es erforderlich, daß es beim Blähprozeß erweicht, um die gewünschte Volumisierung und damit das Abheben der übereinanderliegenden Ebenen der Spinnfäden voneinander nicht zu beeinträchtigen. Das beim Blähprozeß erweichende Bindemittel ist bevorzugt ein Thermoplastharz, z.B. ein Polyacrylat, das in dem Temperaturbereich erweicht, in dem die thermische Volumisierung der Mikrohohlkörper stattfindet. Nur wenn in dieser Produktionsphase die Fasern durch das Erweichen des Bindemittels voneinander lösbar sind, ist eine Expansion der Mikrohohlkörper und des gesamten Flächengebildes möglich. Von diesem Zeitpunkt der Produktionsstufe an übernehmen die thermoplastischen Mikrohohlkörper selbst durch eine Art Versinterung die Verfestigung des Flächengebildes und ersetzen das Ausgangsbindemittel in seiner Wirkung. Deshalb genügen auch sehr geringe Mengen des Bindemittels von nur 3 - 20, vorzugsweise 5 - 10 Gew.%, bezogen auf das Gewicht der Mineral- oder Glasfasern. Die Thermoplasten können für bestimmte Anwendungszwecke so ausgesucht sein, daß sie von dem noch ungehärteten Duroplastharz bei der Verarbeitung des Leichtfüllmaterials zur Herstellung von faserverstärkten Leichtlaminaten an- oder aufgelöst werden. Viele Thermoplasten sind z.B. im Styrol der ungesättigten Polyesterharze löslich. Das thermoplastische Ausgangsbindemittel kann auch so ausgewählt sein, daß es mit dem Imprägnierharz eine stabile chemische Verbindung eingeht, indem es z.B. ein Prepolymeres der Polyesterharzes ist.

Der durch thermische Versinterung der Mikrohohlkugeln untereinander und mit den Fasern bewirkte Zusammenhalt des erfindungsgemäßen Leichtfüllmaterials ist durch Höhe und Dauer der Temperatur beim Blähprozeß einstellbar. Er kann dem jeweiligen Anwendungszweck angepaßt werden. Üblicherweise wird der mechanische Zusammenhalt so eingestellt, daß das Leichtfüllmaterial nach dem Imprägnieren mit Harz seine Struktur und eine gewisse Reißfestigkeit zunächst beibehält, damit es auch im imprägnierten Zustand beim Einlegen und Ausrichten in Formen gehandhabt werden kann. Nach dem Einlegen in die Form sollte ein gewisser mechanischer Druck der Laminierwerkzeuge, z.B. von Bürstenwalzen, Scheibenwalzen oder dgl. ausreichen, um die Struktur aufzulösen und das mit dem Harz getränkte Leichtfüllmaterial in einen plastischen teigartigen Zustand zu versetzen, so daß es spannungsfrei auch in komplizierte dreidimensionale Formen gebracht werden kann. Dieser Plastifizierungsprozeß kann bei Bedarf zusätzlich noch durch ein geeignetes Lösungsmittel verbessert oder beschleunigt werden. Eine völlige Auflösung und Plastifizierung durch mechanische Einwirkung ist besonders wichtig bei der erfindungsgemäßen Verwendung des Leichtfüllmaterials für Spachtelmassen.

Das erfindungsgemäße Leichtfüllmaterial wird vorzugsweise zur Herstellung von faserverstärkten Leichtlaminaten bzw. Verbundstoffen mit geeigneten duroplastischen Harzen verwendet. Es kann dem Verarbeiter in rollenförmigen Bahnen zur Verfügung gestellt werden.

Bei der Herstellung von glasfaserverstärkten Kunststoffen z.B. im Handlaminat oder auch bei Reparaturen von Holz- oder Blechteilen, oder zum Ausfüllen von Hohlräumen werden in großem Umfang geeignete Spachtelmassen benötigt, die in der Regel aus einem Gemisch von geeigneten duroplastischen Harzen, Füllstoffen, Verdickungsmitteln, Farbpigmenten usw. bestehen. Bei den hierfür verwendeten Füllstoffen handelt es sich meist um anorganische Materialien, die ein sehr hohes spezifisches Gewicht haben. Aus diesem Grunde werden, falls ein spezifischer Anwendungsbereich dies wünschenswert macht, auch Mikrohohlkugeln anstelle der erwähnten Füllstoffe verwendet, weil sie das spezifische Gewicht einer derartigen Spachtelmasse erheblich reduzieren.

Das spezifische Gewicht der Mikrohohlkörper, welches zum Teil weniger als 10 % des spezifischen Gewichtes der verwendeten Harze beträgt, bringt jedoch produktions- und verarbeitungstechnische Probleme mit sich, weil es durch den extremen Unterschied der spezifischen Gewichte bereits kurz nach dem Einrühren zu einer Entmischung kommt, indem die Mikrohohlkugeln aufschwimmen und sich an der Oberfläche absetzen und verkrusten. Aus diesem Grund könnten die wünschenswerten Eigenschaften der Mikrohohlkugeln nicht zufriedenstellend für Spachtelmassen genutzt werden, zumal längere Lagerzeiten industriell gefertigter Spachtelmassen problematisch sind.

Hat ein Verarbeiter den Wunsch dennoch Spachtelmassen auf Basis von Mikrohohlkugeln zu verarbeiten, ist er darauf angewiesen, sich seine Spachtelmasse jeweils frisch anzurühren. Dieser Prozeß ist zeitaufwendig und setzt entsprechende Verarbeitungsgeräte voraus, so daß hiervon in der Praxis wenig Gebrauch gemacht wird.

Es hat sich nun gezeigt, daß sich das erfindungsgemäße Leichtfüllmaterial hervorragend zur Herstellung einer Spachtelmasse eignet. Es kann beliebig lange bevorratet werden, ohne daß es seine Eigenschaften ändert. Zur Herstellung einer Spachtelmasse genügt es, herausgeschnittene oder -gestanzte rechteckige oder quadratische Schnitzel von 1 bis 5 cm Kantenlänge oder runde Plättchen von ähnlichem Durchmesser mit einer gewissen Menge Harz anzumischen. Durch einfaches Umrühren mit einem Handspatel oder einem geeigneten Rührwerk löst sich das flächige Material in wenigen Sekunden auf. Durch die mechanische Einwirkung beim Einrühren des Harzes lösen sich die Kurzfasern und die Mikrohohlkörper voneinander und die Struktur geht völlig verloren. Dabei entsteht eine homogene, teigige, verarbeitungsfertige Spachtelmasse. Dieser Vorgang kann durch geeignete Lösungsmittel im Harz noch verbessert werden.

Die Kurzfasern selbst bringen zwei wichtige Eigenschaften mit:
Sie wirken als Armierung in der erzeugten Spachtelmasse und verbessern die Festigkeitseigenschafen und sie wirken als Thixotropiemittel. Dieser Effekt ist besonders wichtig, um zumindest während der Aushärtungsphase eine Entmischung von Harz und Mikrohohlkugeln zu verhindern.

Da in der Regel duroplastische Harze verwendet werden, erfolgt die Aushärtung durch Zugabe geeigneter Härtungsmittel, wie z.B. organische Peroxide. Die Härtungsmittel können entweder vorher dem Harz beigemischt werden, oder aber dem flächenartigen Trockenspachtel bereits bei der Herstellung zugegeben werden. Auf diese Weise kann ein Verarbeiter beide Komponenten, nämlich die Trockenspachtelmasse und das Harz, beliebig lange getrennt aufbewahren.

**Patentansprüche**

1. Leichtfüllmaterial enthaltend ein Vlies aus im wesentlichen zweidimensional orientierten Spinnfasern, die durch Mikrohohlkugeln aus Kunststoff aufgelockert und zusammengehalten werden.

2. Leichtfüllmaterial nach Anspruch 1, dadurch gekennzeichnet, daß die Spinnfasern Einzelfasern (Elementarfäden) sind.

3. Leichtfüllmaterial nach Anspruch 1 oder 2, dadurch gekennzeichnet, daß die Spinnfasern Längen zwischen 2 und 50 mm, vorzugsweise von 5 und 25 mm haben.

4. Leichtfüllmaterial nach einem der Ansprüche 1 bis 3, dadurch gekennzeichnet, daß die Spinnfasern unter den Bedingungen des Blähprozesses der Mikrohohlkugeln beständig sind.

5. Leichtfüllmaterial nach einem der Ansprüche 1 bis 4, dadurch gekennzeichnet, daß die Spinnfasern aus Mineral- oder Glasfasern bestehen.

6. Leichtfüllmaterial nach einem der Ansprüche 1 bis 5, dadurch gekennzeichnet, daß es eine Dicke von 1 bis 20 mm, vorzugsweise 1 bis 5 mm hat.

7. Leichtfüllmaterial nach einem der Ansprüche 1 bis 6, dadurch gekennzeichnet, daß die Mikrohohlkugeln einen Durchmesser zwischen 30 und 300 $\mu$m haben.

8. Leichtfüllmaterial nach einem der Ansprüche 1 bis 7, dadurch gekennzeichnet, daß es ein zusätzliches Bindemittel enthält, das in dem noch ungehärteten Duroplastharz löslich ist.

9. Leichtfüllmaterial nach einem der Ansprüche 1 bis 8, dadurch gekennzeichnet, daß das zusätzliche Bindemittel eine Reaktionskomponente des Duroplastharzes ist.

10. Leichtfüllmaterial nach Anspruch 8 oder 9, dadurch gekennzeichnet, daß es 3 bis 20, vorzugsweise 5 bis 10 Gew.% Bindemittel bezogen auf die Mineral- oder Glasfasern enthält.

11. Leichtfüllmaterial nach einem der Ansprüche 1 bis 10 dadurch gekennzeichnet, daß es einen Härter für das Duroplastharz enthält.

12. Verfahren zur Herstellung eines Leichtfüllmaterials nach einem oder mehreren der Ansprüche 1 bis 11, dadurch gekennzeichnet, daß man in ein Vlies aus im wesentlichen zweidimensional orientierten Spinnfasern Partikel der ungeblähten Vorstufe von Mikrohohlkugeln in Form einer wäßrigen Suspension einschlämmt, das so erhaltene Material trocknet und der zum Aufblähen der Partikel notwendigen Temperatur für die erforderliche Dauer aussetzt.

13. Verfahren nach Anspruch 12, dadurch gekennzeichnet, daß die Spinnfasern des Vlieses durch ein in Wasser schwer oder unlösliches Bindemittel zusammengehalten werden.

14. Verfahren nach Anspruch 12 oder 13, dadurch gekennzeichnet, daß das eingesetzte Vlies eine Dicke von 0,1 bis 1 mm, vorzugsweise 0,2 bis 0,3 mm hat.

15. Verwendung des Leichtfüllmaterials nach einem der Ansprüche 1 bis 11 zur Herstellung von faserverstärkten Leichtlaminaten mit Duroplastharzen.

16. Verwendung des Leichtfüllmaterials nach einem der Ansprüche 1 bis 11 zur Herstellung von Spachtelmassen, insbesondere mit ungehärteten Duroplastharzen.

17. Verwendung des Leichtfüllmaterials nach einem der Ansprüche 1 bis 11 für die Zwecke des Anspruchs 16 in Form von Schnitzeln von 1 bis 5 cm Durchmesser oder Kantenlänge.

Europäisches
Patentamt

EUROPÄISCHER RECHERCHENBERICHT

Nummer der Anmeldung

EP    92 10 1600
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>A | EP-A-0 346 826 (KOLZER)<br>* das ganze Dokument *<br>--- | 1<br>2-11 | B29B15/10<br>B29C67/12<br>D21H21/54<br>D04H1/00 |
| X<br>A | US-A-3 316 139 (HARVEY E.)<br>* Spalte 1-2; Ansprüche; Beispiele *<br><br>--- | 1<br>2,3,5,7,<br>8-11 | |
| X<br>A | EP-A-0 407 996 (IWAKUNI)<br><br><br>* Zusammenfassung *<br>* Ansprüche; Beispiele *<br>--- | 1<br>2-11,14,<br>15 | |
| X<br>A | EP-A-0 002 953 (ROHM AND HAAS)<br><br>* das ganze Dokument *<br>--- | 1<br>5,7,10 | |
| X,D<br>A | EP-A-0 222 399 (KOLZER)<br><br><br>* das ganze Dokument *<br>--- | 1<br>2-11,<br>13-14 | |
| X | EP-A-0 318 228 (INABATA TECHNO LOOP)<br>* Ansprüche 1-9 *<br>--- | 1,2 | RECHERCHIERTE SACHGEBIETE (Int. Cl.5 )<br><br>B29B<br>B29C |
| A | US-A-3 816 169 (ANTHONY E. VASSILIADES)<br>* Ansprüche 1-9,13,14,16-19,21-24 *<br>--- | 12-14 | D21H<br>D04H |
| A | WORLD PATENTS INDEX LATEST<br>Week 0984,<br>Derwent Publications Ltd., London, GB;<br>AN 84-051709<br>& JP-A-59 009 254 (NIPPON VILENE KK) 18. Januar 1984<br>* Zusammenfassung *<br>---<br><br>-/-- | 1,4,7 | |

Der vorliegende Recherchenbericht wurde für alle Patentansprüche erstellt

| Recherchenort | Abschlußdatum der Recherche | Prüfer |
|---|---|---|
| DEN HAAG | 18 MAI 1992 | DURAND F.C. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WORLD PATENTS INDEX LATEST<br>Week 3383,<br>Derwent Publications Ltd., London, GB;<br>AN 83-730846<br>& JP-A-8 115 160 (NIPPO SANGYO) 8. Juli 1983<br>* Zusammenfassung *<br><br>----- | 1,2,4,6,<br>7,14 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 18 MAI 1992 | DURAND F.C. |